# EUROPÄISCHE PATENTSCHRIFT

(11) **EP 3 251 198 B1**
(45) Veröffentlichungstag und Bekanntmachung des Hinweises auf die Patenterteilung: **05.05.2021**
(21) Anmeldenummer: 15816364.2
(22) Anmeldetag: 03.12.2015
(51) Int. Cl.: H02K 7/102, F16D 59/02, F16D 65/18, F16D 55/224, H02K 5/20, H02K 9/19

(54) **ELEKTROMOTOR MIT ELEKTROMAGNETISCH BETAETIGBARER BREMSE**
ELECTRIC MOTOR WITH AN ELECTROMAGNETICALLY ACTUATED BRAKE
MOTEUR ÉLECTRIQUE À FREIN À ACTIONNEMENT ÉLECTROMAGNÉTIQUE

(30) Priorität: 26.01.2015 DE 102015000776
(43) Veröffentlichungstag der Anmeldung: 06.12.2017
(73) Patentinhaber: SEW-EURODRIVE GmbH & Co. KG, 76646 Bruchsal (DE)
(72) Erfinder: WILGING, Klaus, 76297 Stutensee (DE)
(86) Internationale Anmeldenummer: PCT/EP2015/002445
(87) Internationale Veröffentlichungsnummer: WO 2016/119804

(56) Entgegenhaltungen:
- DE-A1-102008 028 605
- GB-A- 470 607
- US-A- 2 607 445

## Beschreibung

Die Erfindung betrifft einen Elektromotor mit elektromagnetisch betätigbarer Bremse.

Ein Bremsmotor ist ein Elektromotor mit elektromagnetisch betätigbarer Bremse.

**Aus der** EP 2 445 090 A1 **ist eine dynamoelektrische Maschine mit Haltebremsvorrichtung bekannt, wobei der Motor Kühlkanäle aufweist, die in einem Verteilerkanal münden, der in einem Gehäuseteil des Motors angeordnet ist, wobei die Bremse einen Spulenkörper aufweist, wobei eine Rohrleitung in den Verteilerkanal mündet.**

**Aus der** US 2014/0077633 A1 **ist ein Fahrzeug bekannt.**

**Aus der** DE 44 42 867 A1 **ist eine Antriebsanordnung für ein Straßenfahrzeug bekannt.**

**Aus der** DE 10 2013 210 559 A1 **ist eine Motor-Generator-Einheit bekannt.**

**Aus der** DE 10 2012 001 701 B3 **ist eine Federdruckbremse mit einem Magnetgehäuse bekannt.**

**Aus der** US 2 607 445 A **ist ein Bremsmechanismus** bekannt, der einen luftgekühlten Elektromotor und eine elektromagnetisch betätigbare Bremse mit einem Spulenkörper aufweist, wobei in der Vorrichtung Kühlkanäle in einer Endplatte und einer Bremsplatte und eine Dichtung zwischen dem Elektromotor und der Bremse vorgesehen sind.

**Aus der** GB 470 607 A **ist eine Verbesserung bei dynamoelektrischen Maschinen bekannt.**

**Aus der** DE 10 2008 028 605 A1 **ist ein Elektromotor mit Bremse bekannt.**

Der Erfindung liegt daher die Aufgabe zugrunde, einen Bremsmotor weiterzubilden, wobei dieser möglichst kompakt ausgeführt sein soll.

Erfindungsgemäß wird die Aufgabe bei dem Elektromotor mit elektromagnetisch betätigbarer Bremse nach den in Anspruch 1 angegebenen Merkmalen gelösl Bevorzugte Ausführungsformen sind in den abhängigen Ansprüchen beschrieben.

Wichtige Merkmale der Erfindung bei dem Elektromotor mit elektromagnetisch betätigbarer Bremse sind, dass der Motor Kühlkanäle aufweist, die in einen Verteilerkanal münden, der in einem Gehäuseteil des Motors angeordnet ist,
wobei die Bremse einen Spulenkörper, insbesondere Magnetkörper, aufweist, insbesondere in welchem eine elektrisch bestrombare Spule aufgenommen ist,
**wobei** ein Rohrteil in den Verteilerkanal mündet, welche durch eine Bohrung des Spulenkörpers geführt ist,
wobei eine Dichtung axial zwischen einem ersten Gehäuseteil, insbesondere also Zwischenteil, und einem zweiten Gehäuseteil, insbesondere also Spulenkörper, angeordnet ist, welche den Innenraum der Bremse, insbesondere den die Spule umfassenden Innenraum der Bremse, gegen die äußere Umgebung abdichtet,
wobei der von dem Rohrteil überdeckte Radialabstandsbereich mit dem von der Dichtung überdeckten Radialabstandsbereich überlappt oder von dem von der Dichtung überdeckten Radialabstandsbereich überdeckt ist,
wobei die Dichtung den Innenraum der Bremse, insbesondere den die Spule umfassenden Innenraum der Bremse, zum Rohrteil hin abdichtet,
insbesondere wobei das Rohrteil zur äußeren Umgebung hin nicht abgedichtet ist und/oder wobei die Dichtung das Rohrteil, insbesondere in Umfangsrichtung, teilweise umgibt und eine entsprechende Öffnung aufweist,
insbesondere wobei die Dichtung als Flachdichtung ausgeführt ist, insbesondere aus einem Material höherer Elastizität als das erste und als das zweite Gehäuseteil..

Von Vorteil ist dabei, dass die Kühlmittelzufuhr von der B-Seite aus, also gegenüberliegend von der Abtriebsseite, also A-Seite, ausführbar ist. Von dort sind auch die elektrischen Anschlüsse betätigbar. Somit ist eine sehr geringe radiale Ausdehnung des Motors erreichbar. Die Bremse ist somit nur mit Ausnehmungen für die Ölzufuhr auszustatten.

Weiter ist von Vorteil, dass bei einem Leck des Rohrteils das austretende Kühlmedium nicht in den Innenraum der Bremse eintritt sondern in die äußere Umgebung hin. Auf diese Weise ist das Rohrteil einerseits axial geschützt im Gehäuse geführt und somit auch eine kompakte Ausführung des Motors erreichbar, andererseits ist aber auch ein Schutz des Innenraums und somit der Funktionsteile der Bremse, wie Spulenwicklung, Federelement, Ankerscheibe, Bremsbelagträger und Bremsbeläge, erreicht. Denn das austretende Kühlmedium wirkt korrosiv und könnte auch elektrische Fehlströme der Spulenwicklung des Elektromagnets der Bremse bewirken. Der Motor ist also kompakt ausgeführt, ohne dass die Sicherheit reduziert ist. Die Sicherheit ist somit erhöht trotz kompakter Ausführung, also geringem Bauraum und relativ großer Nähe der Funktionsteile zum Rohrteil.

Bei einer vorteilhaften Ausgestaltung ist eine zweite Dichtung axial zwischen dem ersten Gehäuseteil und einem dritten Gehäuseteil angeordnet, welche den Innenraum der Bremse, insbesondere den die Spule umfassenden Innenraum der Bremse, gegen die äußere Umgebung abdichtet,
wobei der von dem Rohrteil überdeckte Radialabstandsbereich mit dem von der zweiten Dichtung überdeckten Radialabstandsbereich überlappt oder von dem von der zweiten Dichtung überdeckten Radialabstandsbereich überdeckt ist,
wobei die zweite Dichtung den Innenraum der Bremse, insbesondere den die Spule umfassenden Innenraum der Bremse, zum Rohrteil hin abdichtet,
insbesondere wobei das Rohrteil zur äußeren Umgebung hin nicht abgedichtet ist und/oder wobei die zweite Dichtung das Rohrteil, insbesondere in Umfangsrichtung, teilweise umgibt und eine entsprechende Öffnung aufweist,
insbesondere wobei die zweite Dichtung als Flachdichtung ausgeführt ist, insbesondere aus einem Material höherer Elastizität als das erste und als das dritte Gehäuseteil.

Von Vorteil ist dabei, dass das Zwischenteil beidseitig abgedichtet ist und das Rohrteil wiederum geschützt geführt ist im Gehäuse, ohne nach außen abgedichtet zu sein. Zum Innenraum jedoch ist eine Abdichtung und somit Sperre für das Kühlmedium mittels der Dichtungen bewirkbar.

Für beide Abdichtungen eignet sich als Material ein Kunststoff oder ein Kunststoff, wohingegen die Gehäuseteile aus Metall gefertigt sind.

Bei einer vorteilhaften Ausgestaltung ist das Rohrteil mit dem Spulenkörper schraubverbunden,
insbesondere wobei das Rohrteil einen Außengewindeabschnitt aufweist, der eingeschraubt ist in einen Innengewindeabschnitt des Spulenkörpers. Von Vorteil ist dabei, dass das Rohrteil am Spulenkörper befestigt ist. Außerdem ist das Rohrteil ins Gehäuseteil eingesteckt und somit ist das Rohrteil an zwei voneinander axial beabstandeten Stellen gelagert.

Bei einer vorteilhaften Ausgestaltung ist der Verteilerkanal auf der der Statorwicklung zugewandten Seite, insbesondere axialen Seite, angeordnet,
wobei das Rohrteil durch eine Ausnehmung des Gehäuseteils geführt ist, welche auf der vom Verteilerkanal abgewandten Seite des Gehäuseteils angeordnet ist oder zur Bremse hin mündet. Von Vorteil ist dabei, dass eine kompakte Ausführung des Motors erreichbar ist, indem die Kühlmittelzufuhr von der einen axialen Seite zur anderen axialen Seite ausführbar ist.

Bei einer vorteilhaften Ausgestaltung ist das Rohrteil mittels Dichtung, insbesondere O-Ring, mit dem Gehäuseteil verbunden. Von Vorteil ist dabei, dass eine Abdichtung in einfacher Weise erreichbar ist.

Bei einer vorteilhaften Ausgestaltung umgibt ein Zwischenteil eine Ankerscheibe der Bremse und einen Bremsbelagträger der Bremse gehäusebildend insbesondere radial und weist eine axial durchgehende Bohrung auf, durch welche das Rohrteil hindurchgeführt ist,
insbesondere wobei die Bohrung koaxial ausgerichtet ist zur durch den Spulenkörper durchgehenden Bohrung, durch welche das Rohrteil ebenfalls hindurchgeführt ist. Von Vorteil ist dabei, dass der Abstand zwischen Spulenkörper und Gehäuseteil festlegbar ist durch das Zwischenteil. Das Rohrteil ist außerdem durch eine axial durchgehende Ausnehmung, insbesondere Bohrung, im Zwischenteil geführt.

Bei einer vorteilhaften Ausgestaltung ist das Zwischenteil aus Aluminium und das Gehäuseteil aus Stahl gefertigt,
wobei der Spulenkörper aus ferromagnetischem Material gefertigt ist. Von Vorteil ist dabei, dass Aluminium magnetische Wechselfelder abschirmt und den magnetischen Fluss des Gleichfeldes nicht umleitet.

Bei einer vorteilhaften Ausgestaltung ist der Verteilerkanal auf größerem Radialabstand angeordnet als das vom den Verteilerkanal aufweisenden Gehäuseteil aufgenommene Lager der Rotorwelle. Von Vorteil ist dabei, dass die vom Verteilerkanal gespeisten Kühlkanäle auf größerem Radialabstand anordenbar sind.

Weitere Vorteile ergeben sich aus den Unteransprüchen.

Die Erfindung wird nun anhand von Abbildungen näher erläutert:

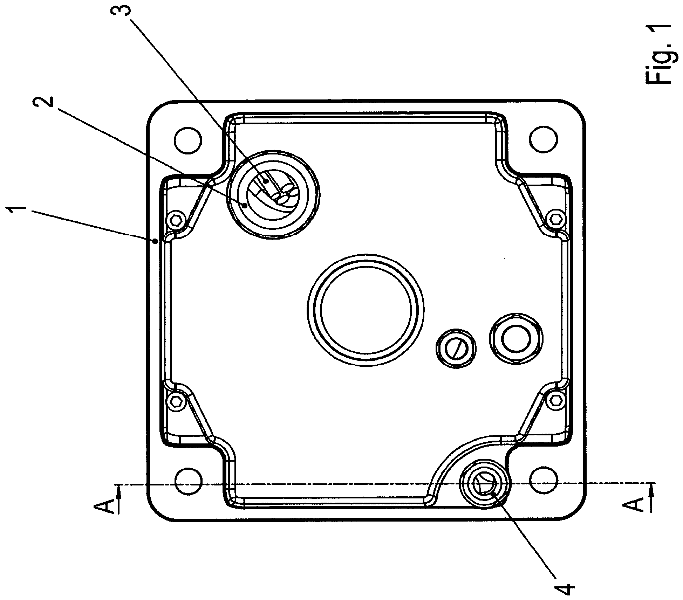

In der Figur 1 ist die Draufsicht auf einen erfindungsgemäßen Elektromotor gezeigt.

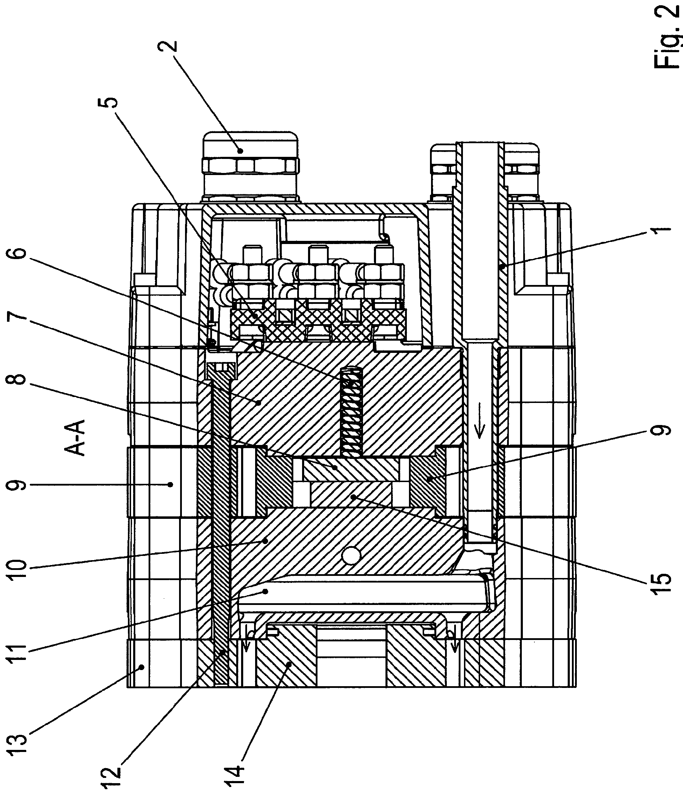

In der Figur 2 ist ein zugehöriger Schnitt entlang der in Figur 1 gekennzeichneten Linie gezeigt.
In der Figur 3 ist ein Bereich des Gehäuses des Elektromotors gezeigt, wobei Dichtungen (42, 43), insbesondere Flachdichtungen, zwischen Gehäuseteilen (7, 9, 10) angeordnet sind.
In Figur 4 ist ein Querschnitt durch eine 42 der Dichtungen gezeigt.

Wie in den Figuren dargestellt, weist das Gehäuse des Elektromotors ein Gehäuseteil 1 auf, welches den elektrischen Anschlussbereich gehäusebildend umgibt.

Hierzu ist im metallischen Gehäuseteil 1 eine durchgehende Ausnehmung ausgeführt, in welcher ein Kabeldurchführungsteil 2, insbesondere Kabelverschraubung, angeordnet ist, so dass ein Kabel 3 von der äußeren Umgebung des Elektromotors in den elektrischen Anschlussbereich führbar ist und dort mit einer Anschlussvorrichtung 5 verbunden ist, mit welcher auch die Statorwicklungsdrahtendabschnitte verbunden sind. Somit ist die Verschaltung, also beispielsweise Sternschaltung oder Dreieckschaltung, des Motors mittels der Anschlussvorrichtung 5 vorgebbar.

Außerdem weist das Gehäuseteil 1 eine weitere durchgehende Ausnehmung auf, durch welche ein Rohrteil 4 durchgeführt ist.

Mit dem Gehäuseteil 1 ist ein Spulenkörper 7, insbesondere also Magnetkörper, einer elektromagnetisch betätigbaren Bremse fest verbunden.

Der Elektromotor weist eine Rotorwelle 14 auf, die über Lager im Gehäuse gelagert. Das Gehäuse umfasst ein Gehäuseteil 13, insbesondere Statorgehäuse, welches axial beidseitig mit einem weiteren Gehäuseteil 10, insbesondere Lagerschild, fest verbunden ist. Zwischen dem als Lagerschild fungierenden weiteren Gehäuseteil 10 und dem Spulenkörper 7, der aus einem ferromagnetischen Stahlguss, wie GGG, gefertigt ist, ist ein Zwischenteil 9 angeordnet.

Die genannte feste Verbindung wird mittels einer Verbindungsschraube 12 ausgeführt, welche durch das als Statorgehäuseteil fungierende Gehäuseteil 13, durch das Zwischenteil 9 und den Spulenkörper 7 geführt ist und diese axial aufeinander zu drückt.

Das Zwischenteil 9 ist vorzugsweise aus Aluminium, die anderen Gehäuseteile (13, 1) aus Stahl oder Stahlguss gefertigt.

Eine Ankerscheibe 8 ist drehfest aber axial verschiebbar mit dem Spulenkörper 7 verbunden, wobei Führungselemente die axiale Führung bewirken.

Im Spulenkörper 7 ist eine bestrombare Spule in einer Ringnut des Spulenkörpers 7 aufgenommen, wobei die Ringachse der Ringnut koaxial zur Achse der Rotorwelle 14 ausgerichtet ist.

Die Ankerscheibe 8 wird bei Bestromung der Spule zum Spulenkörper 7 hingezogen entgegen der von einem Federelement 6 erzeugten Federkraft, wobei das Federelement 6 abgestützt ist am Spulenkörper 7 und auf die Ankerscheibe 8 drückt.

Drehfest aber axial verschiebbar auf der Rotorwelle 14 ist ein Bremsbelagträger 15 zwischen Ankerscheibe 8 und Gehäuseteil 10 angeordnet, das auch eine Gegenbremsfläche aufweist.

Bei Nichtbestromung der Spule wird die Ankerscheibe 7 auf den Bremsbelagträger 15 gedrückt und dieser dann auf die Gegenbremsfläche.

Im Gehäuseteil 10 ist ein ringförmiger Verteilerkanal 11 angeordnet, aus dem Kühlkanäle mit einem Kühlmedium speisbar sind, die axial durch den Stator geführt sind. Die Kühlkanäle sind in Umfangsrichtung voneinander vorzugsweise regelmäßig beabstandet und münden in den ringförmigen Verteilerkanal 11.

Das Rohrteil 1 weist einen Außengewindeabschnitt auf, der mit einem Innengewindeabschnitt einer axial durch den Spulenkörper 7 durchgehenden Bohrung schraubverbunden ist. Das Rohrteil 1 mündet in den ringförmigen Verteilerkanal 11. Das Rohrteil ist durch eine Bohrung im Zwischenteil hindurchgeführt.

Somit ist also der Motor, insbesondere der Bereich des Stators mit einem Kühlmedium kühlbar, wie Öl oder Wasser.

Im in der Figur nicht gezeigten weiteren Lagerschild, welches auf der von der Bremse axial abgewandten Seite des Motors angeordnet ist, ist ebenfalls ein ringförmiger Verteilerkanal angeordnet, in welchen die Kühlkanäle münden und von dem dann durch ein weiteres Rohrteil das Kühlmedium aus dem Motor herausführbar ist.

Auf diese Weise ist der Motor flüssigkeitsgekühlt betreibbar, wobei der Motor als Bremsmotor ausgeführt ist und die Bremse trotzdem sehr kompakt bleibt. Denn die Durchführung des Rohrteils 4 von der B-Seite, also einem axialen Endbereich, her, benötigt kein weiteres Bauvolumen. Das Rohrteil 4 erstreckt sich axial und geradlinig. Es muss also nicht gebogen werden.

Somit ist die Kühlmittelzufuhr von der B-Seite aus ausführbar. Ebenso sind die elektrischen Anschlüsse von der B-Seite aus betätigbar. Denn die Funktion des Anschlusskastens ist axial hinter der Bremse angeordnet. Auf der vom Stator axial abgewandten Seite der Bremse, insbesondere des Spulenkörpers 7, sind also elektrische Anschlussvorrichtungen und Kühlmittelzufuhr angeordnet.

Somit ist die radiale Ausdehnung des Motors gering.

Das Rohrteil 4 ist in dem von der Anschlussvorrichtung 5 überdeckten axialen Bereich mit einem größeren Querschnitt ausgeführt als in dem vom Spulenkörper 7 überdeckten axialen Bereich.

Das Rohrteil 4 ist also von der Gehäuseoberfläche zum Gehäuseteil 10 hin verjüngt ausgeführt.

Das Rohrteil 4 ist in eine Ausnehmung des Gehäuseteils 10 eingesteckt und mittels Dichtungen, wie O-Ring, zum Gehäuseteil 10 hin abgedichtet. Die Ausnehmung mündet in den ringförmigen Verteilerkanal 11.

Die Kabelverschraubung 2, also die Herausführung der elektrischen Leitungen, ist auf einem nicht verschwindenden Radialabstand angeordnet und in Umfangsrichtung von dem Rohrteil 4 beabstandet, die auf gleichem oder ähnlichem Radialabstand angeordnet ist oder sein darf.

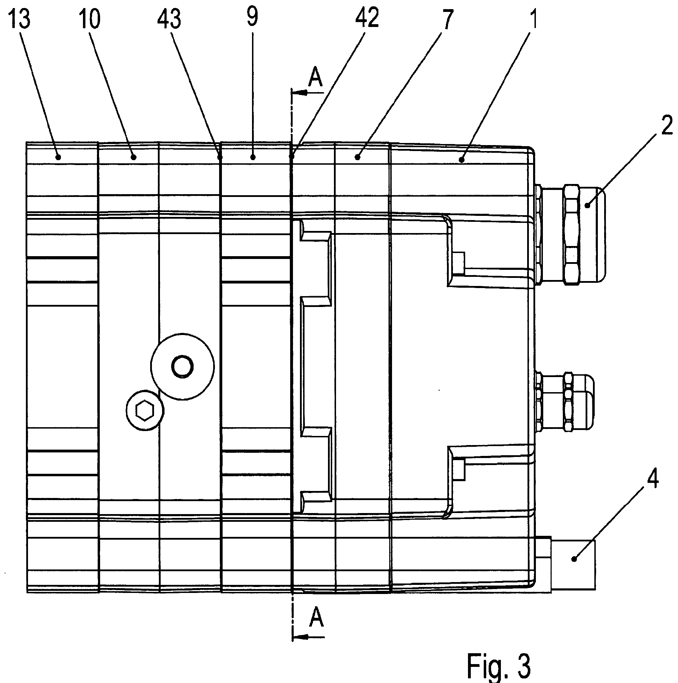

Wie in Figur 3 gezeigt, ist die dichte Verbindung zwischen dem Zwischenteil 9 und dem Gehäuseteil 10, insbesondere Lagerschild, mittels einer Dichtung **43** hergestellt und die dichte Verbindung zwischen dem Zwischenteil 9 **und dem Spulenkörper 7** mittels einer Dichtung 42.

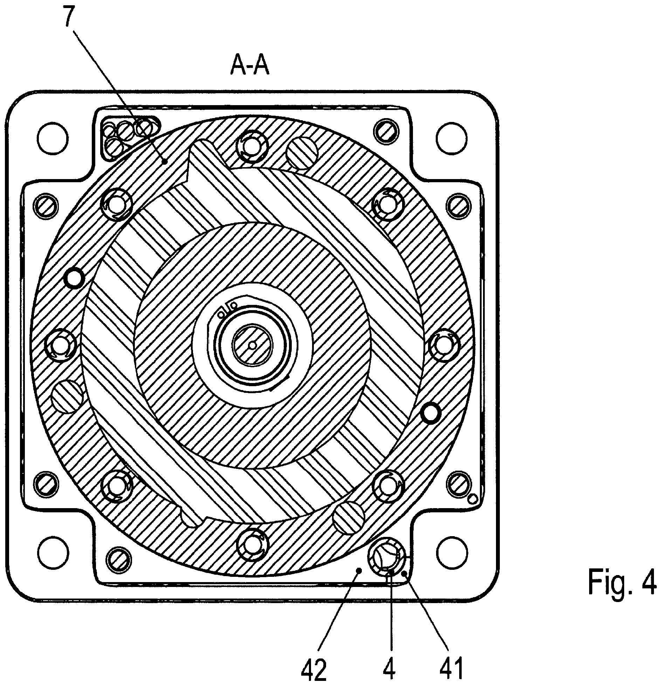

Beide Dichtungen sind nach dem in Figur 4 gezeigten Prinzip ausgeführt, also nach radial innen abdichtend, indem die Dichtungen 42 und 43 als Flachdichtungen ausgeführt sind. Teilweise umschließen die Dichtungen 42 und 43 zwar das Rohrteil 4, jedoch ist der umschlossene Bereich zur äußeren Umgebung hin nicht geschlossen und somit nicht abgedichtet, insbesondere weist also eine jeweilige Ausnehmung 41 der jeweiligen Dichtung 42 auf, also einen nicht abgedichteten Bereich 41. Bei einem eventuellen Leck des Rohrteils 4 tritt somit das austretende Kühlmedium in die Umgebung heraus und nicht in den abgedichteten Innenraum, also zur Bremse hin. Somit ist das Rohrteil 4 geschützt im Gehäuse geführt und nur durch den nicht abgedichteten Bereich von der Umgebung her zugänglich.

Der von den Dichtungen 42 und 43 in axialer Richtung überdeckte Bereich ist mindestens fünfzigmal oder mindestens hundertmal kleiner als der von den Dichtungen 42 und 43 in radialer Richtung überdeckte Bereich.

Beim Schraubverbinden des Gehäuses werden die Gehäuseteile in axialer Richtung aufeinander gepresst und somit die Dichtungen 42 und 43 elastisch in axialer Richtung gedrückt, so dass die in axialer Richtung vorhandene Wandstärke der Dichtungen 42 und 43 entsprechend verringert ist.
Das Rohrteil 4 ist auch mehrteilig ausführbar.

### Bezugszeichenliste

1 Gehäuseteil
2 Kabeldurchführungsteil, insbesondere Kabelverschraubung
3 Kabel
4 Rohrteil
5 Anschlussvorrichtung
6 Federelement
7 Spulenkörper, insbesondere Magnetkörper
8 Ankerscheibe
9 Zwischenteil
10 Gehäuseteil, insbesondere Lagerschild
11 ringförmiger Verteilerkanal
12 Verbindungsschraube
13 Gehäuseteil
14 Rotor
15 Bremsbelagträger
41 Ausnehmung der Dichtung 42, also nicht abgedichteter Bereich
42 Dichtung
43 Dichtung

## Patentansprüche

1. Elektromotor mit aus Gehäuseteilen zusammengesetztem Gehäuse und
elektromagnetisch betätigbarer Bremse,
wobei der **mit einer Kühlflüssigkeit kühlbare** Motor Kühlkanäle aufweist, die in einen Verteilerkanal (11) münden, der in einem Gehäuseteil des Motors angeordnet ist,
wobei die Bremse einen Spulenkörper (7), insbesondere Magnetkörper, aufweist, insbesondere in welchem eine elektrisch bestrombare Spule aufgenommen ist,
**wobei** ein Rohrteil (4) in den Verteilerkanal (11) mündet, welche durch eine Bohrung des Spulenkörpers (7) geführt ist,
wobei eine Dichtung (42) axial zwischen einem ersten Gehäuseteil, das ein Zwischenteil (9) ist, und einem zweiten Gehäuseteil, das der Spulenkörper (7) ist, angeordnet ist, welche den Innenraum der Bremse, insbesondere den die Spule umfassenden Innenraum der Bremse, gegen die äußere Umgebung und zum Rohrteil (4) hin abdichtet,
wobei der von dem Rohrteil (4) überdeckte Radialabstandsbereich mit dem von der Dichtung (42) überdeckten Radialabstandsbereich überlappt oder von dem von der Dichtung (42) überdeckten Radialabstandsbereich überdeckt ist,
insbesondere wobei das Rohrteil (4) zur äußeren Umgebung hin nicht abgedichtet ist und/oder wobei die Dichtung (42) das Rohrteil (4), insbesondere in Umfangsrichtung, teilweise umgibt und eine entsprechende Öffnung aufweist,
wobei das Zwischenteil (9) eine Ankerscheibe (8) der Bremse und einen Bremsbelagträger (15) der Bremse gehäusebildend insbesondere radial umgibt und eine axial durchgehende Bohrung aufweist, durch welche das Rohrteil (4) hindurchgeführt ist,
wobei die Bohrung koaxial ausgerichtet ist zur durch den Spulenkörper (7) durchgehenden Bohrung, durch welche das Rohrteil (4) ebenfalls hindurchgeführt ist,
**wobei die** Dichtung (42) als Flachdichtung ausgeführt ist **und das Rohrteil (4) teilweise** umschliesst, **so dass eine Ausnehmung (41), insbesondere Öffnung, ausgebildet ist**.

2. Elektromotor nach Anspruch 1,
wobei **die Dichtung (42) als Flachdichtung aus einem Material höherer Elastizität als das erste und als das zweite Gehäuseteil (9, 7) ausgeführt ist.**

3. Elektromotor nach mindestens einem der vorangegangenen Ansprüche,
wobei
eine zweite Dichtung (43) axial zwischen dem ersten Gehäuseteil (9) und einem dritten Gehäuseteil (10) angeordnet ist, welche den Innenraum der Bremse, insbesondere den die Spule umfassenden Innenraum der Bremse, gegen die äußere Umgebung abdichtet,
wobei der von dem Rohrteil (4) überdeckte Radialabstandsbereich mit dem von der zweiten Dichtung (43) überdeckten Radialabstandsbereich überlappt oder von dem von der zweiten Dichtung (43) überdeckten Radialabstandsbereich überdeckt ist,
wobei die zweite Dichtung (43) den Innenraum der Bremse, insbesondere den die Spule umfassenden Innenraum der Bremse, zum Rohrteil (4) hin abdichtet,
insbesondere wobei das Rohrteil (4) zur äußeren Umgebung hin nicht abgedichtet ist und/oder wobei die zweite Dichtung (43) das Rohrteil (4), insbesondere in Umfangsrichtung, teilweise umgibt und eine entsprechende Öffnung aufweist,
insbesondere wobei die zweite Dichtung (43) als Flachdichtung ausgeführt ist, insbesondere aus einem Material höherer Elastizität als das erste und als das dritte Gehäuseteil (10).

4. Elektromotor nach Anspruch 3,
wobei **die zweite Dichtung (43) als Flachdichtung aus einem Material höherer Elastizität als das erste und als das dritte Gehäuseteil (9, 10) ausgeführt ist.**

5. Elektromotor nach mindestens einem der vorangegangenen Ansprüche,
wobei das Rohrteil (4) mit dem Spulenkörper (7) schraubverbunden ist,
insbesondere wobei das Rohrteil (4) einen Außengewindeabschnitt aufweist, der eingeschraubt ist in einen Innengewindeabschnitt des Spulenkörpers (7).

6. Elektromotor nach mindestens einem der vorangegangenen Ansprüche,
wobei der Verteilerkanal (11) auf der der Statorwicklung zugewandten Seite, insbesondere axialen Seite, angeordnet ist,
wobei das Rohrteil (4) durch eine Ausnehmung des Gehäuseteils (1) geführt ist, welche auf der vom Verteilerkanal (11) abgewandten Seite des Gehäuseteils (1) angeordnet ist oder zur Bremse hin mündet.

7. Elektromotor nach mindestens einem der vorangegangenen Ansprüche,
wobei das Rohrteil (4) mittels Dichtung, insbesondere O-Ring, mit dem Gehäuseteil verbunden ist.

8. Elektromotor nach mindestens einem der vorangegangenen Ansprüche,
wobei das Zwischenteil (9) aus Aluminium und das Gehäuseteil (1) aus Stahl gefertigt ist,
wobei der Spulenkörper (7) aus ferromagnetischem Material gefertigt ist.

9. Elektromotor nach mindestens einem der vorangegangenen Ansprüche,
wobei der Verteilerkanal (11) auf größerem Radialabstand angeordnet ist als das vom den Verteilerkanal (11) aufweisenden Gehäuseteil (1) aufgenommene Lager der Rotorwelle.

10. Elektromotor nach mindestens einem der vorangegangenen Ansprüche,
wobei das Rohrteil (4) mehrteilig und/oder aus Kupfer ausgeführt ist.

## Claims

1. An electric motor with a housing, made up of housing parts, and an electromagnetically actuatable brake,
wherein the motor coolable with a cooling fluid has cooling channels,
wherein the brake has a coil former (7), in particular a magnetic body, in particular in which there is received a coil able to be supplied with electric current,
wherein a pipe part (4) opens into the distribution channel (11) and is guided through a bore of the coil former (7),
wherein a seal (42) is arranged axially between a first housing part, which is an intermediate part (9), and a second housing part, which is the coil former (7), which seal seals the interior space of the brake, in particular the brake interior-space encompassing the coil, from the external environment and with respect to the pipe part (4),
wherein the radial spacing region covered by the pipe part (4) overlaps with the radial spacing region covered by the seal (42) or is covered by the radial spacing region covered by the seal (42),
in particular wherein the pipe part (4) is not sealed with respect to the external environment and/or wherein the seal (42) partially surrounds the pipe part (4), in particular in a circumferential direction, and has a corresponding opening,
wherein the intermediate part (9) surrounds, in particular radially, an armature plate (8) of the brake and a brake lining carrier (15) of the brake in a housing-forming manner and has an axially through-passing bore through which the pipe part (4) is guided,
wherein the bore is oriented coaxially with the bore passing through the coil former (7), through which the pipe part (4) is likewise guided,
wherein the seal (42) is in the form of a flat seal and partially encloses the pipe part (4), so that a cut-out (41), in particular opening, is formed.

2. An electric motor according to claim 1,
wherein the seal (42) is in the form of a flat seal made of a material with greater elasticity than the first and than the second housing part (9, 7).

3. An electric motor according to at least one of the preceding claims,
wherein a second seal (43) is arranged axially between the first housing part (9) and a third housing part (10) and seals the interior space of the brake, in particular the brake interior-space encompassing the coil, from the external environment,
wherein the radial spacing region covered by the pipe part (4) overlaps with the radial spacing region covered by the second seal (43) or is covered by the radial spacing region covered by the second seal (43),
wherein the second seal (43) seals the interior space of the brake, in particular the brake interior-space encompassing the coil, with respect to the pipe part (4),
in particular wherein the pipe part (4) is not sealed with respect to the external environment and/or wherein the second seal (43) partially surrounds the pipe part (4), in particular in a circumferential direction, and has a corresponding opening,
in particular wherein the second seal (43) is in the form of a flat seal, in particular made of a material with greater elasticity than the first and than the third housing part (10).

4. An electric motor according to claim 3,
wherein the second seal (43) is in the form of a flat seal made of a material with greater elasticity than the first and than the third housing part (9, 10).

5. An electric motor according to at least one of the preceding claims,
wherein the pipe part (4) is screw-connected to the coil former (7),
in particular wherein the pipe part (4) has an externally threaded portion which is screwed into an internally threaded portion of the coil former (7).

6. An electric motor according to at least one of the preceding claims,
wherein the distribution channel (11) is arranged on the side, in particular axial side, facing the stator winding,
wherein the pipe part (4) is guided through a cut-out of the housing part (1), which cut-out is arranged on that side of the housing part (1) facing away from the distribution channel (11) or opens towards the brake.

7. An electric motor according to at least one of the preceding claims,
wherein the pipe part (4) is connected to the housing part by means of a seal, in particular an O-ring.

8. An electric motor according to at least one of the preceding claims,
wherein the intermediate part (9) is manufactured from aluminium and the housing part (1) from steel,
wherein the coil former (7) is manufactured from ferromagnetic material.

9. An electric motor according to at least one of the preceding claims,
wherein the distribution channel (11) is arranged at a greater radial spacing than the rotor-shaft bearing received by the housing part (1) having the distribution channel (11).

10. An electric motor according to at least one of the preceding claims,
wherein the pipe part (4) is multi-part and/or made of copper.

## Revendications

1. Moteur électrique doté d'un boîtier composé de parties de boîtier et d'un frein à commande électromagnétique,
dans lequel le moteur, qui peut être refroidi par un liquide de refroidissement, présente des canaux de refroidissement qui débouchent dans un canal de distribution (11) qui est disposé dans une partie de boîtier du moteur,
dans lequel le frein présente un corps de bobine (7), en particulier un corps magnétique, en particulier dans lequel est logée une bobine pouvant être alimentée en courant électrique,
dans lequel une partie tubulaire (4) débouche dans le canal de distribution (11), laquelle est passée à travers un alésage du corps de bobine (7),
dans lequel un joint (42) est disposé axialement entre une première partie de boîtier, qui est une partie intermédiaire (9), et une deuxième partie de boîtier, qui est le corps de bobine (7), qui assure l'étanchéité de l'intérieur du frein, en particulier de l'intérieur du frein comprenant la bobine, par rapport à l'environnement extérieur et à la partie tubulaire (4),
dans lequel la plage de distance radiale couverte par la partie tubulaire (4) chevauche la plage de distance radiale couverte par le joint (42) ou est couverte par la plage de distance radiale couverte par le joint (42),
en particulier dans lequel la partie tubulaire (4) n'est pas rendue étanche par rapport à l'environnement extérieur et/ou dans lequel le joint (42) entoure partiellement la partie tubulaire (4), en particulier dans la direction circonférentielle, et présente une ouverture correspondante,
dans lequel la partie intermédiaire (9) entoure un disque d'induit (8) du frein et un support de garniture de frein (15) du frein en formant un boîtier, en particulier radialement, et présente un alésage axial continu à travers lequel la partie tubulaire (4) est passée,
dans lequel l'alésage est orienté coaxialement à l'alésage traversant le corps de bobine (7), à travers lequel la partie tubulaire (4) est également passée,
dans lequel le joint (42) est réalisé sous la forme d'un joint plat et entoure partiellement la partie tubulaire (4), de sorte qu'un évidement (41), en particulier une ouverture, est formé(e).

2. Moteur électrique selon la revendication 1,
dans lequel le joint (42) est réalisé sous la forme d'un joint plat constitué d'un matériau ayant une élasticité supérieure à celle de la première et de la deuxième partie de boîtier (9, 7).

3. Moteur électrique selon au moins l'une des revendications précédentes,
dans lequel un deuxième joint (43) est disposé axialement entre la première partie de boîtier (9) et une troisième partie de boîtier (10), qui assure l'étanchéité de l'intérieur du frein, en particulier de l'intérieur du frein comprenant la bobine, par rapport à l'environnement extérieur,
dans lequel la plage de distance radiale couverte par la partie tubulaire (4) chevauche la plage de distance radiale couverte par le deuxième joint (43) ou est couverte par la plage de distance radiale couverte par le deuxième joint (43),
dans lequel le deuxième joint (43) assure l'étanchéité de l'intérieur du frein, en particulier de l'intérieur du frein comprenant la bobine, par rapport à la partie tubulaire (4),
en particulier dans lequel la partie tubulaire (4) n'est pas rendue étanche par rapport à l'environnement extérieur et/ou dans lequel le deuxième joint (43) entoure partiellement la partie tubulaire (4), en particulier dans la direction circonférentielle, et présente une ouverture correspondante,
en particulier dans lequel le deuxième joint (43) est réalisé sous la forme d'un joint plat, en particulier constitué d'un matériau ayant une élasticité supérieure à celle de la première et de la troisième partie de boîtier (10).

4. Moteur électrique selon la revendication 3,
dans lequel le deuxième joint (43) est réalisé sous la forme d'un joint plat constitué d'un matériau ayant une élasticité supérieure à celle de la première et de la troisième partie de boîtier (9, 10).

5. Moteur électrique selon au moins l'une des revendications précédentes,
dans lequel la partie tubulaire (4) est reliée par vissage au corps de bobine (7),
en particulier dans lequel la partie tubulaire (4) présente une section filetée extérieure qui est vissée dans une section filetée intérieure du corps de bobine (7).

6. Moteur électrique selon au moins l'une des revendications précédentes,
dans lequel le canal de distribution (11) est disposé sur le côté tourné vers l'enroulement statorique, en particulier le côté axial,
dans lequel la partie tubulaire (4) est passée à travers un évidement de la partie de. boîtier (1) qui est disposé sur le côté de la partie de boîtier (1) opposé au canal de distribution (11) ou débouche vers le frein.

7. Moteur électrique selon au moins l'une des revendications précédentes,
dans lequel la partie tubulaire (4) est reliée à la partie de boîtier au moyen d'un joint d'étanchéité, en particulier d'un joint torique.

8. Moteur électrique selon au moins l'une des revendications précédentes,
dans lequel la partie intermédiaire (9) est réalisée en aluminium et la partie de boîtier (1) en acier,
dans lequel le corps de bobine (7) est réalisé dans un matériau ferromagnétique.

9. Moteur électrique selon au moins l'une des revendications précédentes,
dans lequel le canal de distribution (11) est disposé à une distance radiale plus grande que le palier de l'arbre de rotor reçu par la partie de boîtier (1) présentant le canal de distribution (11).

10. Moteur électrique selon au moins l'une des revendications précédentes,
dans lequel la partie tubulaire (4) est réalisée en plusieurs parties et/ou en cuivre.
